# EUROPÄISCHE PATENTSCHRIFT

(11) **EP 3 504 103 B1**
(45) Veröffentlichungstag und Bekanntmachung des Hinweises auf die Patenterteilung: **27.04.2022**
(21) Anmeldenummer: 17754341.0
(22) Anmeldetag: 16.08.2017
(51) Int. Cl.: B62D 1/16, B62D 1/185, B62D 1/20, F16D 3/06, F16C 3/03

(54) **LÄNGENVERÄNDERBARE LENKWELLE UND VERFAHREN ZUR HERSTELLUNG EINER LÄNGENVERÄNDERBAREN LENKWELLE**
LENGTH-ADJUSTABLE STEERING SHAFT AND METHOD FOR PRODUCING A LENGTH-ADJUSTABLE STEERING SHAFT
ARBRE DE DIRECTION DE LONGUEUR MODIFIABLE ET PROCÉDÉ PERMETTANT DE PRODUIRE UN ARBRE DE DIRECTION DE LONGUEUR MODIFIABLE

(30) Priorität: 24.08.2016 DE 102016215869
(43) Veröffentlichungstag der Anmeldung: 03.07.2019
(73) Patentinhaber: thyssenkrupp Presta AG, 9492 Eschen (LI); thyssenkrupp AG, 45143 Essen (DE)
(72) Erfinder: BREUER, Marius, 48307 Rochester Hills, Michigan (US); DUROT, Janick, 9443 Widnau (CH)
(74) Vertreter: thyssenkrupp Intellectual Property GmbH
(86) Internationale Anmeldenummer: PCT/EP2017/070765
(87) Internationale Veröffentlichungsnummer: WO 2018/036880

(56) Entgegenhaltungen:
- GB-A- 2 205 149
- JP-A- 2004 217 095
- JP-A- 2011 117 496
- US-A1- 2009 270 188

## Beschreibung

### Stand der Technik

Die Erfindung betrifft eine längenveränderbare Lenkwelle, umfassend eine Hohlwelle aus metallischem Material mit einer Öffnung, in der eine Innenwelle aus metallischem Material drehmomentschlüssig und axial bewegbar aufgenommen ist, und die eine Auszugsicherung mit Anschlagelementen aufweist, die zumindest einen Außenanschlag umfassen, der in die Öffnung der Hohlwelle vorsteht, und einen Innenanschlag, der von der Innenwelle nach außen vorsteht, wobei der Außenanschlag aus dem metallischen Material der Hohlwelle geformt ist und der Innenanschlag aus dem metallischen Material der Innenwelle geformt ist, wobei die Anschlagelemente in axialer Richtung gegeneinander gerichtete Anschlagflächen aufweisen, wobei an mindestens einem der Anschlagelemente zumindest teilweise im Bereich der Anschlagfläche eine Schicht aus nichtmetallischem Material angebracht ist, dass die Hohlwelle und die Innenwelle bezüglich einer Drehung um die Längsachse formschlüssig ineinander greifende Formschlusselemente aufweisen, die als ineinander greifende Außen- und Innenverzahnungen mit in Längsrichtung achsparallel erstreckenden Nuten und in diese eingreifenden Zähnen ausgebildet sind und die zumindest teilweise mit der Schicht bedeckt sind.

Um in einem Kraftfahrzeug eine Verstellung des Lenkrads relativ zur Fahrerposition in Längsrichtung, d.h. in Richtung der Längsachse der Lenksäule zu ermöglichen, sind teleskopierbare Lenkwellen bekannt, bei denen zumindest ein Wellenabschnitt zwischen dem Lenkrad und dem Lenkgetriebe längenverstellbar ist. Die längenverstellbare Lenkwelle kann die fahrerseitige Lenkspindel bilden oder die Lenkzwischenwelle zwischen der Lenkspindel und dem Lenkgetriebe.

Eine längenveränderbare Lenkwelle hat einen als Hohlwelle ausgebildeten ersten Wellenteil, in deren axialer Öffnung ein als Innenwelle ausgebildetes zweites Wellenteil drehmomentschlüssig und in axialer Richtung verschiebbar, mit anderen Worten teleskopierbar aufgenommen ist. Die drehmomentschlüssige Verbindung erfolgt über Formschlusselemente, beispielsweise einer Außenverzahnung der Innenwelle, die in eine korrespondierende Innenverzahnung in der Öffnung bezüglich einer Drehung um die Längsachse formschlüssig eingreift, wie beispielsweise in der US 9157482 B2 oder der JP 2004217095 beschrieben. Um eine sichere Übertragung des Lenkmoments zu gewährleisten, sind sowohl die Hohlwelle als auch die Innenwelle aus einem metallischen Material gefertigt, in der Regel aus Stahl oder einer Aluminiumlegierung.

Um zu verhindern, dass beim Verstellen der Lenksäule oder bei der Montage die Innenwelle von der Hohlwelle durch vollständiges Herausziehen getrennt wird, ist eine Auszugsicherung mit Anschlagelementen vorgesehen, die zumindest einen von der Innenwelle radial nach außen von der äußeren Mantelfläche vorstehenden Innenanschlag und einen radial nach innen in den Querschnitt der Öffnung der Außenwelle vorstehenden Außenanschlag umfassen. Diese Außen- und Innenanschläge weisen im zusammengesetzten Zustand der Lenkwelle axial gegeneinander gerichtete Anschlagflächen auf, die sich im radialen Querschnitt derart überschneiden, dass sie beim Auszug der Innenwelle in axialer Richtung aufeinander zu bewegt werden und gegeneinander anschlagen, bevor das Ende der Innenwelle die freie Öffnung der Hohlwelle erreicht. Somit wird die axiale Relativbewegung von Hohl- und Innenwelle in der Endposition des Auszugs begrenzt.

Aus der JP 2004217095 ist es bekannt, einen Außenanschlag durch eine nach innen vorspringende Umformung, beispielsweise eine Verstemmung der Hohlwelle im Randbereich der Öffnung zu realisieren, gegen die beim Herausziehen die von der Innenwelle radial vorstehende Zähne anschlagen können, welche den Innenanschlag bilden. Um die maximal beim Auszug wirkenden Kräfte sicher aufnehmen zu können, werden sowohl der Außenanschlag als auch der Innenanschlag aus dem metallischen Material der Innen- und Außenwelle geformt, in der Regel aus Stahl oder einer Aluminiumlegierung, wobei die beim Anschlag gegeneinander in Kontakt kommenden Anschlagflächen ebenfalls durch metallische Oberflächen gebildet werden. In ähnlicher Weise wird in der US 9157482 B2 vorgeschlagen, Einprägungen in die Stirnseite der metallischen Hohlwelle plastisch einzuformen, um zumindest einen am Rand der Öffnung radial nach innen in den Öffnungsquerschnitt vorstehenden Innenanschlag auszubilden, der in der Endposition des Auszugs die Axialbewegung eines Innenanschlags in Form eines an der Innenwelle angeordneten Zahns blockiert. Die dabei gegeneinander anschlagenden Anschlagflächen weisen ebenfalls metallische Oberflächen auf, zumeist aus Stahl oder einer Aluminiumlegierung.

Die aus dem metallischen Material der Hohlwelle und der Innenwelle gebildeten Anschlagelemente gewährleisten, dass auch bei Ausübung hoher Auszugskräfte die Lenkwelle nicht getrennt wird. Beim Erreichen der Endposition prallen jedoch die metallischen Anschlagflächen mit einem Schlag aufeinander, wodurch eine unerwünschte Geräuschentwicklung auftreten kann. Außerdem wird der harte metallische Anschlag beim Verstellen der Lenksäule haptisch als unangenehm empfunden.

Aus der JP 2011 117496 A ist eine Lenkwelle der eingangs genannten Art bekannt. Bei dieser weisen die Stirnseiten der Zähne Anschlagflächen auf. Dadurch ist die konstruktive Gestaltungsfreiheit eingeschränkt, und überdies besteht das Risiko von Beschädigungen.

Angesichts der vorangehend erläuterten Problematik ist es eine Aufgabe der vorliegenden Erfindung, eine längenverstellbare Lenkwelle dahingehend weiterzubilden, dass die konstruktiven Gestaltungsmöglichkeiten zu erweitern und das Risiko von Beschädigungen im Betrieb zu verringern.

### Darstellung der Erfindung

Zur Lösung der vorgenannten Problematik wird erfindungsgemäß vorgeschlagen, dass die Schicht auch zumindest ein Anschlagelement auf dessen axialer Anschlagfläche umschließt, welches in einem Umfangsbereich zwischen benachbarten Zähnen angeordnet ist, und welches in die Innenwelle als Zwick durch eine in die äußere Oberfläche schräg zur Längsachse eingestemmte Einkerbung plastisch eingestemmt ist, an deren Rand das metallische Material der Innenwelle plastisch verdrängt und radial nach außen aufgeworfen ist.

Erfindungsgemäß ist das Anschlagelement einstückig ausgebildet mit der metallischen Innenwelle. Dadurch hat das Anschlagelement eine metallische, mechanisch belastbare Grundstruktur, die erfindungsgemäß mit der nichtmetallischen Schicht verbunden wird. Die einstückige Grundstruktur kann durch plastische Umformung des metallischen Materials der Innenwelle erzeugt werden. Ein Außenanschlag kann gebildet werden, indem der Rand der freien Öffnung der Hohlwelle radial nach innen verformt wird, beispielsweise durch stirnseitige Einformungen, welche das metallische Material zur Bildung mindestens eines in den Öffnungsquerschnitt vorstehenden Außenanschlags verdrängen. Ein Innenanschlag kann im Endbereich des in die Hohlwelle eintauchenden Endes gefertigt werden, indem in die äußere Oberfläche der Innenwelle bevorzugt schräg zur Längsachse eine Einkerbung eingestemmt wird, an deren Rand das metallische Material der Innenwelle plastisch verdrängt und zur Bildung eines Innenanschlags in Form eines sogenannten Zwicks radial nach außen aufgeworfen wird. Auf der Seite der Einkerbung wird an dem metallischen Zwick die Anschlagfläche erzeugt, die erfindungsgemäß mit der nichtmetallischen Schicht versehen wird.

Erfindungsgemäß weist zumindest eines von zwei miteinander zusammenwirkenden Anschlagelementen, also ein Innen- oder Außenanschlag, oder auch beide, eine zumindest teilweise Beschichtung oder Umhüllung aus einem nichtmetallischen Material aus. Diese bildet eine außenliegende Schicht, die sich im Bereich der Anschlagfläche erstreckt. Auf ihrer dem Anschlagelement zugewandten Seite ist die Schicht mit der metallischen Oberfläche verbunden. Die freie Oberfläche auf der dem Anschlagelement abgewandten Seite der Schicht dient als nichtmetallische Anschlagfläche, die mit dem korrespondierenden Anschlag in Kontakt kommen kann.

Die erfindungsgemäße Schicht befindet sich in axialer Richtung zwischen den Anschlagflächen der Anschlagelemente, so dass beim Erreichen der Endposition eine metallische Anschlagfläche in jedem Fall gegen eine nichtmetallische Oberfläche anschlägt, also kein Metall-Metall-Kontakt erfolgt. Dadurch wird die Geräuschentwicklung verringert.

Es ist möglich, dass nur eines von zwei miteinander zusammenwirkenden Anschlagelementen mit einer erfindungsgemäßen nichtmetallischen Schicht versehen ist, beispielsweise ein Innenanschlag oder ein Außenanschlag. Dadurch trifft am Anschlag eine metallische auf eine nichtmetallische Anschlagfläche, wodurch bereits die erfindungsgemäße Dämpfung realisiert werden kann. Ein Vorteil dieser Ausführung ist, dass nur eine der Wellen mit der Schicht versehen werden muss, und der Fertigungsaufwand gering ist. Alternativ können auch beide zusammenwirkende Anschlagelemente eine nichtmetallische Schicht aufweisen. Dadurch ist es möglich, die Schichtdicke der nichtmetallischen Schicht jeweils geringer zu halten. Außerdem ist es denkbar, die im Anschlag zusammenwirkenden Schichten aus unterschiedlichen nichtmetallischen Materialien auszubilden, welche unterschiedliche Eigenschaften aufweisen, beispielsweise hinsichtlich Härte, Elastizität, Abrieb- oder Reißfestigkeit und dergleichen. Eine entsprechende Materialwahl ermöglicht eine Optimierung an die jeweiligen Anforderungen. Die einzelnen Schichtdicken können ebenfalls unterschiedlich vorgegeben werden.

Es ist vorteilhaft, dass das nichtmetallische Material weicher ist als das metallische Material von Hohl- und Innenwelle. Dadurch wird der beim Zusammentreffen in die Anschlagflächen eingebrachte Impuls durch die Schicht mechanisch gedämpft, so dass der Anschlag sich haptisch weniger hart anfühlt und weniger Vibrationen und Geräusche auftreten bzw. übertragen werden.

Die Dicke der Schicht, insbesondere in Normalenrichtung der Anschlagflächen, kann vorgegeben werden, um die Dämpfungswirkung unter Berücksichtigung der Eigenschaften des nichtmetallischen Materials einzustellen und im Hinblick auf die im Betrieb zu erwartenden Beanspruchungen zu optimieren. Beispielsweise kann eine bestimmte Dämpfung durch eine größere Schichtdicke eines härteren nichtmetallischen Materials, oder durch eine dünnere Schicht eines weicheren nichtmetallischen Materials realisiert werden.

Vorzugsweise ist das nichtmetallische Material ein thermoplastischer Kunststoff. Thermoplastische Kunststoffe wie beispielsweise Polypropylen (PP), Polyaryletherketone (PAEK), Polyoxymethylen (POM), Polyphthalamide (PPA) oder Polyamid (PA) zeichnen sich durch eine große Bandbreite von möglichen Materialeigenschaften aus und können daher zur optimalen Anpassung an das gewünschte Anschlagverhalten ausgewählt werden. Beispielsweise können thermoplastische Elastomere eingesetzt werden, die hinsichtlich Elastizität und Dämpfungsverhalten angepasst sein können. Weiterhin ist eine rationelle Verarbeitung und Anbringung an den Anschlagelementen möglich, beispielsweise mittels Spritzgießverfahren.

Es kann vorgesehen sein, dass die Schicht stoffschlüssig an dem Anschlagelement befestigt ist. Das nichtmetallische Material kann beispielsweise mit der metallischen Oberfläche verklebt oder verschweißt werden, und zwar flächig durchgehend oder in Teilbereichen der Kontaktfläche zwischen der Schicht und den Anschlagelementen. Zur Verklebung kann ein geeigneter Klebstoff zwischen die Schicht und das jeweilige Anschlagelement eingebracht werden. Alternativ kann eine stoffschlüssige Verbindung mittels Ultraschall- oder Reibschweißen erzeugt werden. Wird als nichtmetallisches Material ein thermoplastischer Kunststoff verwendet, kann dieser durch An- oder Umspritzen in schmelzflüssigem Zustand auf das Anschlagelement aufgebracht werden, wodurch die Schicht stoffschlüssig an der metallischen Oberfläche haftet.

Die metallische Oberfläche von Hohl- oder Innenwelle kann in dem Bereich des Anschlagelements, wo die Schicht angebracht werden soll, haftungserhöhend ausgestaltet sein. Die haftungserhöhende Gestaltung kann durch eine Oberflächenstrukturierung erreicht werden, beispielsweise durch eine definierte Rauigkeit, oder mechanische Profilierung wie Rändelungen, Riffelungen, Einprägungen oder dergleichen.

Es kann weiterhin vorgesehen sein, dass das Anschlagelement zumindest teilweise formschlüssig von der Schicht umschlossen wird. Zusätzlich oder alternativ kann die Schicht dadurch form- oder kraftschlüssig im Bereich eines Anschlagelements mit einer Hohl- oder Innenwelle verbunden sein. Beispielsweise können in Umfangsrichtung und/ oder Längsrichtung ineinander eingreifende Formschlusselemente an der Schicht und der jeweiligen Welle ausgebildet werden. Eine kraftschlüssige Verspannung ist ebenfalls denkbar und möglich, beispielsweise dadurch, dass die Schicht die jeweilige Welle bzw. das daran ausgebildete Anschlagelement elastisch umgreift.

Wird die Schicht als Umspritzung ausgebildet, bei der das Anschlagelement zur Ausbildung der Schicht ganz oder teilweise mit thermoplastischem Kunststoff umspritzt ist, kann es vollständig oder teilweise in die Schicht eingebettet oder von dieser umschlossen sein, dass eine kraft- und formschlüssige Verbindung erzeugt wird, die besonders fest und sicher ist.

Es kann vorgesehen sein, dass die Hohlwelle und die Innenwelle bezüglich einer Drehung um die Längsachse formschlüssig ineinander greifende Formschlusselemente aufweisen, die zumindest teilweise mit der Schicht bedeckt sind. Die Formschlusselemente können als ineinander greifende Außen- und Innenverzahnungen mit in Längsrichtung achsparallel erstreckenden Nuten und in diese eingreifenden Zähnen ausgebildet sein, wie dies von den zum Stand der Technik genannten längenverstellbaren Lenkwellen grundsätzlich bekannt ist. Die erfindungsgemäß nichtmetallische Schicht kann eine Gleitschicht bilden, welche in radialer Richtung zwischen den metallischen Verzahnungen angeordnet ist und für eine reibungs- und spielarme Verstellbarkeit sorgt. Die Schicht kann beispielsweise als Umspritzung aus thermoplastischem Kunststoff ausgebildet sein, welche die Zähne nicht nur auf ihrer radialen Außenseite zumindest teilweise umschließt, sondern auch zumindest eines der Anschlagelemente auf dessen axialer Anschlagfläche. Diese Ausführung hat den Vorteil, dass eine bisher bekannte, jedoch nur als Gleitbeschichtung genutzte Umspritzung durch ihre Erstreckung auf ein Anschlagelement die zusätzliche Funktion der erfindungsgemäßen Anschlagdämpfung erfüllt. Auf diese Weise kann die erfindungsgemäße Funktionalität praktisch ohne zusätzlichen fertigungsgtechnischen Aufwand realisiert werden.

Die Schicht kann sich in Längsrichtung über eine Schichtlänge erstrecken, wobei der äußere Durchmesser der Schicht bezogen auf die Längsachse gleich bleibt. In die Schicht kann das metallische Anschlagelement bevorzugt eingebettet sein, wobei die Außenseite der Schicht über das Anschlagelement hinweg parallel zur Längsachse verläuft. Die Schicht kann beispielsweise durch Umspritzung an die Innenwelle angeformt sein und sich über einen Teil deren Länge parallel zur Längsachse erstrecken. Im Bereich des freien Endes der Innenwelle kann wie beschrieben ein Anschlagelement ausgebildet sein, beispielsweise als Innenanschlag in Form eines oben beschriebenen Zwicks. Der Innenanschlag befindet sich innerhalb der Schicht, die als sich in Längsrichtung mit gleichförmigem Querschnitt erstreckende Umspritzung aus thermoplastischem Kunststoff ausgebildet sein kann.

Im Stand der Technik ist ein Verfahren bekannt zur Herstellung eine längenverstellbaren Lenkwelle, umfassend eine Hohlwelle aus metallischem Material mit einer Öffnung, in der eine Innenwelle aus metallischem Material drehmomentschlüssig und axial bewegbar aufgenommen ist, und die eine Auszugsicherung mit Anschlagelementen aufweist, die zumindest einen Außenanschlag umfassen, der in die Öffnung der Hohlwelle vorsteht, und einen Innenanschlag, der von der Innenwelle nach außen vorsteht, wobei aus dem metallischen Material der Hohlwelle geformt ist und der Innenanschlag aus dem metallischen Material der Innenwelle geformt ist, wobei die Anschlagelemente in axialer Richtung gegeneinander gerichtete Anschlagflächen aufweisen, mit den Schritten
- Bereitstellen einer jeweils metallischen Hohlwelle und Innenwelle, die bezüglich einer Drehung um die Längsachse formschlüssig ineinander greifende Formschlusselemente aufweisen, die als ineinander greifende Außen- und Innenverzahnungen mit in Längsrichtung achsparallel erstreckenden Nuten und in diese eingreifenden Zähnen ausgebildet sind und die zumindest teilweise mit einer Schicht aus nichtmetallischem Material bedeckt sind,
- Erzeugen eines Innenanschlags mit einer axialen Anschlagfläche auf der Innenwelle, welcher vom Außenumfang der Innenwelle radial nach außen vorsteht,
- Einführen der Innenwelle in axialer Richtung in die Öffnung der Hohlwelle
- Erzeugen eines Außenanschlags mit einer axialen Anschlagfläche an der Hohlwelle, welcher radial nach innen in der offenen Querschnitt der Öffnung eingreift, wobei die Anschlagflächen von Innen- und Außenanschlag in axialer Richtung gegeneinander gerichtet sind.

Um eine Lenkwelle herzustellen, bei der die konstruktiven Gestaltungsmöglichkeiten erweitert sind und das Risiko von Beschädigungen im Betrieb geringer ist, wird erfindungsgemäß vorgeschlagen, dass vor dem Einführen der Innenwelle in die Öffnung der Hohlwelle die Schicht zumindest teilweise im Bereich zumindest einer der Anschlagflächen angebracht wird, so dass die Schicht auch zumindest ein Anschlagelement auf dessen axialer Anschlagfläche umschließt, welches in einem Umfangsbereich zwischen benachbarten Zähnen angeordnet ist, und welches in die Innenwelle als Zwick durch eine in die äußere Oberfläche schräg zur Längsachse eingestemmte Einkerbung plastisch eingestemmt ist, an deren Rand das metallische Material der Innenwelle plastisch verdrängt und radial nach außen aufgeworfen ist.

Durch den erfindungsgemäßen Verfahrensschritt wird auf dem von der Innenwelle radial vorstehenden Innenanschlag eine nichtmetallische Schicht angebracht, deren mögliche Ausgestaltungen weiter oben beschrieben sind.

Die nichtmetallische Schicht kann eine Kunststoff-Beschichtung sein, bevorzugt aus thermoplastischem Kunststoff, der im Spritzgussverfahren als Umspritzung auf die Innenwelle aufgebracht wird. Die Schicht bedeckt erfindungsgemäß eine axiale Anschlagfläche des Innenanschlags, oder zumindest einen Teil davon. Eine vorteilhafte Ausgestaltung sieht vor, dass die Hohlwelle und die Innenwelle bezüglich einer Drehung um die Längsachse formschlüssig ineinander greifende Formschlusselemente aufweisen, die auf Ihren Oberflächen zumindest teilweise mit der Schicht bedeckt sind. Die Formschlusselemente können als ineinander greifende Außen- und Innenverzahnungen mit in Längsrichtung achsparallel erstreckenden Nuten und in diese eingreifende Zähnen ausgebildet sein, wobei sich die Schicht zumindest in Teilbereichen zwischen der Außen- und Innenverzahnung befindet. Dort sorgt sie als Gleitschicht für ein verbessertes Gleitverhalten beim axialen Verstellen der Lenkwelle.

Ein Innenanschlag kann wie oben beschrieben als Zwick (plastisch umgeformter Materialaufwurf) in die Innenwelle plastisch eingebracht werden, bevorzugt eingestemmt. Vorzugsweise kann ein Innenanschlag in einem Umfangsbereich zwischen benachbarten Zähnen angeordnet sein, beispielsweise an Grund innerhalb einer Nut. Die Schichtdicke kann so bemessen sein, dass der Innenanschlag in den Querschnitt der Schicht vollständig eingebettet ist, wobei die Schicht eine in Längsrichtung achsparallel gerade durchgehende glatte Außenfläche hat. Alternativ kann der Innenanschlag in eine durch die Schicht gebildeten Rippe eingebettet sein.

Die Umspritzung der Formschlusselemente und des Innenanschlags kann in einem einzigen Spritzgießvorgang erfolgen. Dadurch kann ein erfindungsgemäß verbessertes gedämpftes Anschlagelement ohne zusätzlichen Fertigungsaufwand zur Verfügung gestellt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung,
- Figur 2: eine längenveränderbare Lenkwelle,
- Figur 3: eine Lenkwelle gemäß Figur 2 in auseinander gezogenem Zustand,
- Figur 4: eine Hohlwelle der Lenkwelle gemäß Figur 2,
- Figur 5: eine Detailansicht der Lenkwelle gemäß Figur 2,
- Figur 5a: einen Teilschnitt der Hohlwelle gemäß Figur 5,
- Figur 6: einen Längsschnitt entlang der Längsachse durch die Hohlwelle gemäß Figur 4,
- Figur 7: eine Detailansicht des Längsschnitts gemäß Figur 6,
- Figur 8: einen Längsschnitt entlang der Längsachse durch ein Spritzgießwerkzeug mit einer darin eingespannten Zahnwelle der Lenkwelle gemäß Figur 2,
- Figur 9: einen Längsschnitt entlang der Längsachse wie in Figur 8 durch ein Spritzgießwerkzeug in einer zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

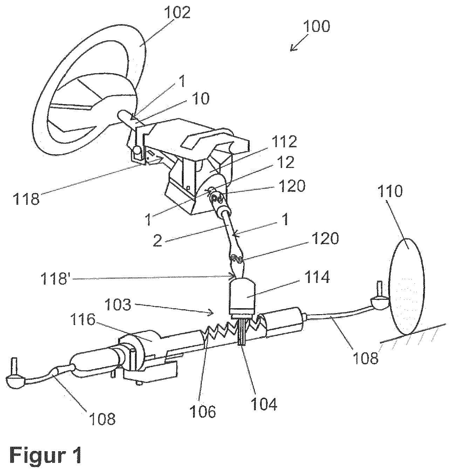

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann. Die Lenkzwischenwelle der Lenkwelle 1, der in dem dargestellten Beispiel zwischen zwei kardanischen Gelenken 120 angeordnet ist und die Ausgangswelle 12 mit dem Ritzel 104 des Lenkgetriebes 103 verbindet, ist erfindungsgemäß als längenveränderbare Lenkwelle 2 ausgebildet.

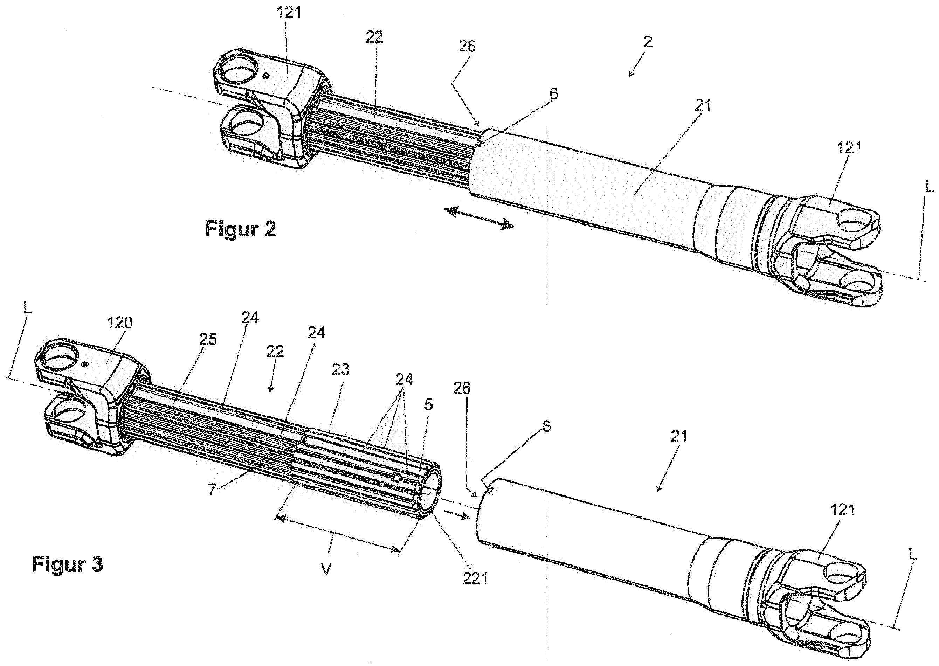

Figur 2 und Figur 3 zeigen die Lenkwelle 2 in montiertem Zustand (Figur 2) und in axialer Richtung auseinander gezogenem Zustand (Figur 3).

Die längenveränderbare Lenkwelle 2 umfasst eine Hohlwelle 21 und eine als Zahnwelle 22 ausgebildete Innenwelle. Die Zahnwelle 22 weist eine Verzahnung 23 in Form einer Außenverzahnung mit einer Mehrzahl von auf dem Außenumfang angeordneten Zähnen 24 auf, die sich in Richtung der Längsachse L axial erstrecken. Die Verzahnung 23 ist über eine Länge V der Verzahnung 23 der Zahnwelle 22 mit einer als Gleitschicht ausgebildeten Schicht 5 umspritzt, so dass die Zähne 24 durch die Schicht 5 bedeckt sind. An dem der umspritzten Verzahnung 23 abgewandten Ende ist eine Gelenkgabel 121 eines Gelenks 120 angebracht. Alternativ kann es vorgesehen sein, dass die Verzahnung 23 nur in dem Bereich der Zahnwelle ausgebildet ist, in dem nachfolgend die Schicht 5 aufgebracht werden soll, d.h. die Verzahnung ist nicht über die gesamte Länge der Zahnwelle 22 ausgebildet, so dass nur in einem axialen Bereich der Zahnwelle eine Verzahnung ausgebildet ist.

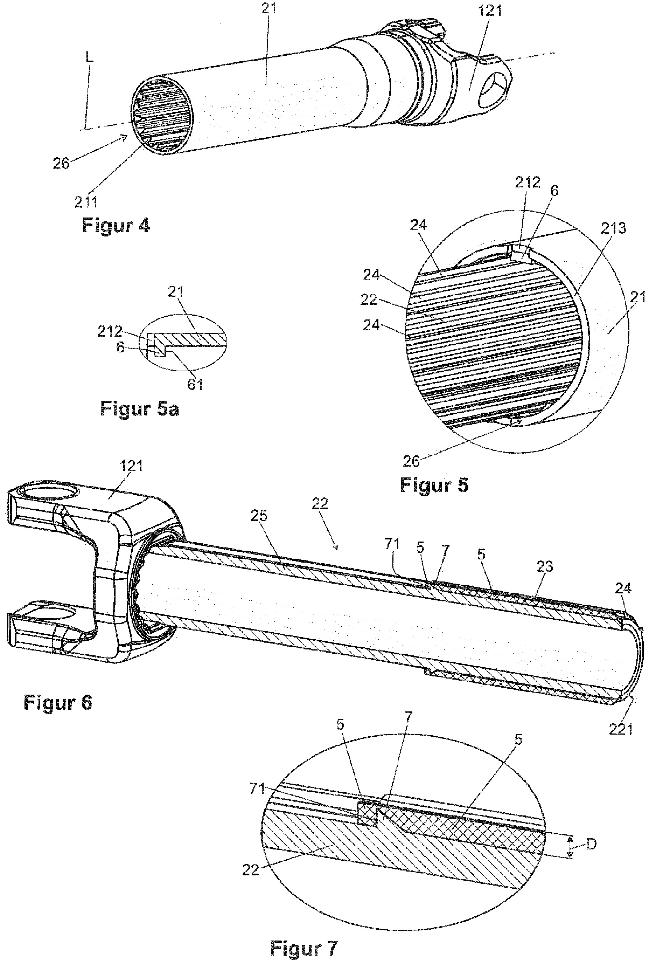

Aus der Figur 4 ist entnehmbar, dass die Hohlwelle 21 eine zur Zahnwelle 22 hin offene Öffnung 26 mit einer Innenverzahnung 211 aufweist, in welcher die Verzahnung 23 formschlüssig aufnehmbar ist. Zur Herstellung einer drehmomentschlüssigen Verbindung wird die Zahnwelle 22 ausgehend von der in Figur 3 dargestellten Situation in axialer Richtung, wie darin mit dem Pfeil angedeutet in Richtung der Längsachse L in die Öffnung 26 der Hohlwelle 21 eingeführt, so dass der in Figur 2 dargestellte montierte Zustand erreicht wird. In diesem zusammengebauten Zustand können sich die Zahnwelle 22 und die Hohlwelle 21 zum Ausgleich von Abstandsunterschieden entlang der Längsachse L relativ zueinander bewegen, wie mit dem Doppelpfeil angedeutet.

An dem der Öffnung 26 abgewandten Ende ist an der Hohlwelle 21 eine Gelenkgabel 121 eines Gelenks 120 angebracht.

Aus Figur 3 ist entnehmbar, dass die Zahnwelle 22 außerhalb der Verzahnung 23 einen Schaft 25 aufweist, wobei in dem dargestellten Beispiel die Länge V der Verzahnung 23 mit der als Gleitschicht ausgebildeten Schicht 5 umspritzt ist.

Figur 5 zeigt in vergrößerter Darstellung, wie die Zahnwelle 22 in die Öffnung 26 der Hohlwelle 21 axial eingeführt ist. In die axiale Stirnfläche 213 der Hohlwelle 21ist eine Einformung 212 plastisch eingestemmt, zur Bildung eines Außenanschlags 6. Der Außenanschlag 6 steht nach innen in den Öffnungsquerschnitt der Öffnung 26 vor. In dem in Figur 5a gezeigten Längsschnitt durch den Außenanschlag 6 entlang der Längsachse L ist erkennbar, dass an dem in die Öffnung 26 nach innen vorstehenden Bereich eine axiale Anschlagfläche 61 gebildet wird. Dass die Anschlagfläche 61 axial ausgerichtet ist meint, dass ihre Normalenrichtung zumindest teilweise in axialer Richtung parallel zur Längsachse L weist, und zwar von dem Ende der Hohlwelle 22 aus gesehen in die Öffnung 26 hinein. Mit anderen Worten ist die Anschlagfläche 61 so ausgebildet, dass diese mit einer Anschlagfläche 71 der Zahnwelle 22 zusammenwirken kann, so dass eine axiale Verschiebung der Zahnwelle 22 gegenüber der Hohlwelle 21 in einer Richtung zu begrenzt wird.

Der Außenanschlag 6 befindet sich in einem Bereich zwischen zwei in Umfangsrichtung benachbarten Zähnen 24 der Zahnwelle 22.

Figur 6 zeigt die Zahnwelle 22 in einer vergrößerten Darstellung, in dem der Schaft 25 und die Verzahnung 23 entlang der Längsachse L geschnitten dargestellt sind. Dabei liegt die Schnittebene in Umfangsrichtung zwischen benachbarten Zähnen 24.

Figur 7 zeigt einen vergrößerten Ausschnitt im hinteren Endbereich der Schicht 5, der dem freien Ende 221 der Zahnwelle 22 abgewandt ist. Daraus ist erkennbar, wie ein Innenanschlag 7 ausgebildet ist, der von der Außenfläche, d.h. der äußeren Mantelfläche der Zahnwelle 22 radial nach außen vorsteht. Der Innenanschlag 7 weist eine axiale Anschlagfläche 71 auf, deren Normalenrichtung zumindest teilweise in axialer Richtung parallel zur Längsachse L weist, und zwar vom freien Ende 221 weg. Im zusammengesetzten Zustand von Figur 2 befindet sich der Anschlag 7 innerhalb der Hohlwelle 21, wobei zumindest eine Komponente der Normalenrichtung der Anschlagfläche 71 aus der Öffnung 26 hinaus gerichtet ist.

Der Außenanschlag 6 und der Innenanschlag 7 sind so angeordnet, dass sich im zusammengebauten Zustand gemäß Figur 2 die Anschlagflächen 61 und 71 im Querschnitt überschneiden bzw. überlappen und sich somit in axialer Richtung gegenüberliegen. Anders ausgedrückt bildet der Außenanschlag 6 einen in Richtung der Längsachse wirksamen Hinterschnitt, so dass, wenn die Zahnwelle 22 aus der Öffnung 26 der Hohlwelle 21 herausgezogen wird, der Innenanschlag 7 mit seiner Anschlagfläche 71 gegen die Anschlagfläche 61 des Außenanschlags 6 anschlägt.

Der Innenanschlag 7 bzw. der Außenanschlag 6 sind einstückig mit der Zahnwelle 22 bzw. der Hohlwelle 21 ausgebildet und bestehen folglich aus dem jeweiligen metallischen Material, zumeist Stahl oder eine Aluminiumlegierung.

Erfindungsgemäß ist im Bereich der Anschlagfläche 71 die Schicht 5 aus nichtmetallischem Material auf dem Innenanschlag 7 angebracht. Die Schicht 5 besteht vorzugsweise aus einem thermoplastischen Kunststoff oder Elastomer und kann stoffschlüssig angebracht sein. Die Anschlagfläche 61 schlägt gegen das Material der Schicht 5 an, welche auf der Anschlagfläche 71 aufgebracht ist. Beim Anschlagen der Anschlagfläche 61 gegen die Schicht 5 erfolgt die Kraftdurchleitung durch die Schicht 5 hindurch auf die Anschlagfläche 71.

In dem gezeigten Beispiel erstreckt sich die Schicht 5 über im Wesentlichen die gesamte Verzahnung 23. Im zusammengebauten Zustand fungiert die Schicht 5 als reibungsmindernde Gleitschicht zwischen den metallischen Oberflächen der Hohlwelle 21 und der Zahnwelle 22. Wie sich aus Figuren 6 und 7 ergibt, hat die Schicht 5 eine in axialer Richtung gleichmäßige Schichtdicke D, und zwar auch in dem Umfangsbereich, in dem sich der Außenanschlag 6 befindet. Die Schichdicke D weist jedoch in Umfangsrichtung unterschiedliche Werte auf, d.h. die Schichtdicke D ist im Bereich der Zahnköpfe der Zähne 24 dünner als im Zahnfußbereich der Zähne 24. Der Innenanschlag 7 ist dabei vollständig in die Schicht 5 eingebettet, wie in Figur 7 erkennbar ist. Die Schichtdicke D ist größer als die radiale Höhe des Innenanschlags 7, mit der dieser von der Außenfläche der Zahnwelle 22 radial vorsteht. Dadurch ist nicht nur die Anschlagfläche 71 mit dem Material der Schicht 5, bevorzugt einem thermoplastischen Kunststoff, bedeckt, sondern der gesamte Innenanschlag 7 formschlüssig von der Schicht umgriffen. Dadurch wird eine kraft- und formschlüssige Verbindung zwischen der Schicht 5 und dem Innenanschlag 7 erzeugt.

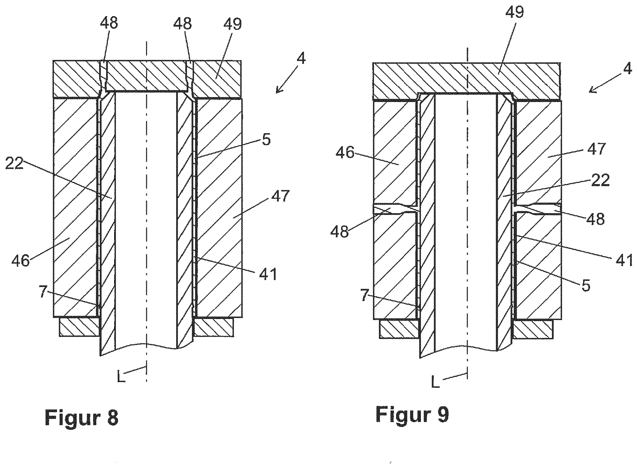

Bevorzugt kann die Schicht 5 als Umspritzung aus einem thermoplastischen Kunststoff im Spritzgussverfahren auf zumindest einen Teil der Verzahnung 23 der Zahnwelle 22 aufgebracht werden. Hierzu wird die Zahnwelle 22 in eine Spritzgussform 4 eingebracht, wie in den Figuren 7 und 8 dargestellt.

Im Detail ist eine vergrößerte Querschnittansicht der im Spritzgießwerkzeug 4 eingespannten Zahnwelle 22 gemäß Figur 6 in der Figur 7 dargestellt, die innerhalb des Formhohlraums 41 orientiert und zentriert eingespannt ist.

Bei geschlossener Spritzgussform 4 wird schmelzflüssiger Kunststoff in den Formhohlraum 41 zwischen dessen Formflächen und den Außenumfang der Zahnwelle 22 im Bereich der Verzahnung 23 eingespritzt. Der Formhohlraum 41 definiert die Abmessungen und damit die Wandstärke der noch einzubringenden Schicht 5, welche erfindungsgemäß auf der Anschlagfläche 71 und der Verzahnung 23 angebracht ist und auch die Gleitbeschichtung bildet.

Das Einspritzen des schmelzflüssigen Kunststoffs in die Spritzgussform 4 kann über axiale, stirnseitig am Formhohlraum 41 angeordnete Einspritzdüsen an den Anspritzpunkten 48 erfolgen, wie in Figur 8 schematisch dargestellt. Die Anspritzpunkte 48 befinden sich in einer Stirnwand 49 der Spritzgussform 4, die dem freien Ende der Zahnwelle 3 gegenüberliegt. Zum Entformen kann diese Stirnwand 49 in axialer Richtung von der Zahnwelle 3 wegbewegt werden.

Alternativ können die Anspritzpunkte 48 radial angeordnet sein, wie in Figur 9 gezeigt.

Nach dem Abkühlen und Aushärten der als Kunststoff-Umspritzung ausgebildeten Schicht 5 werden die Schieber 46 und 47 zum Entformen sternförmig radial nach außen auseinanderbewegt, so dass die fertig umspritzte Zahnwelle 22 aus der Spritzgussform 4 entnommen werden kann. Die als Kunststoff-Umspritzung ausgebildete Schicht 5 ist dann stoff- und formschlüssig mit der Zahnwelle 22 verbunden, insbesondere im Bereich der Anschlagfläche 71 des Innenanschlags 7.

In den Figuren 8 und 9 ist der Formhohlraum 41 bereits mit dem zur Ausbildung der Schicht 5 eingeleiteten Kunststoff gefüllt.

Zur Herstellung einer Lenkwelle 2 wird die wie vorangehend beschrieben eine mit der Schicht 5 umspritzte Zahnwelle 22 in die Öffnung 26 einer Hohlwelle 21, die noch nicht mit einem Außenanschlag 6 versehen ist, in axialer Richtung eingeführt. Danach erfolgt eine Verstemmung der Stirnfläche 213, wie in Figuren 5 und 5a dargestellt, zur plastischen Formung des Außenanschlags 6.

Wird nun die Zahnwelle 22 aus der Hohlwelle 21 in axialer Richtung herausgezogen, schlägt der Innenanschlag 7 beim Erreichen der Endposition gegen den Außenanschlag 6 an, wobei sich zwischen den Anschlagflächen 61 und 71 die an dem Innenanschlag 7 angespritzte Schicht 5 befindet und den Aufprall dämpft.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: lenkbares Rad
- 112, 114, 116: Hilfskraftunterstützung
- 118, 118': Drehmomentsensor
- 120: Gelenk
- 121: Gelenkgabel
- 2: längenveränderbare Lenkwelle
- 21: Hohlwelle
- 211: Innenverzahnung
- 212: Einformung
- 213: Stirnfläche
- 22: Zahnwelle
- 221: Freies Ende
- 23: Verzahnung
- 24: Zahn
- 25: Schaft
- 26: Öffnung
- 4: Spritzgussform
- 41: Formhohlraum
- 46, 47: Schieber
- 48: Anspritzpunkt
- 49: Stirnwand
- 5: Schicht
- 6: Außenanschlag
- 7: Innenanschlag
- 71, 61: Anschlagfläche
- L: Längsachse
- V: Länge Verzahnungsbereich
- D: Schichtdicke

## Patentansprüche

1. Längenveränderbare Lenkwelle (2), umfassend eine Hohlwelle (21) aus metallischem Material mit einer Öffnung (26), in der eine Innenwelle (22) aus metallischem Material drehmomentschlüssig und axial bewegbar aufgenommen ist, und die eine Auszugsicherung mit Anschlagelementen (6, 7) aufweist, die zumindest einen Außenanschlag (6) umfassen, der in die Öffnung (26) der Hohlwelle (21) vorsteht, und einen Innenanschlag (7), der von der Innenwelle (22) nach außen vorsteht, wobei der Außenanschlag (6) aus dem metallischen Material der Hohlwelle (21) geformt ist und der Innenanschlag (7) aus dem metallischen Material der Innenwelle (22) geformt ist, wobei die Anschlagelemente (6, 7) in axialer Richtung gegeneinander gerichtete Anschlagflächen (61, 71) aufweisen,
wobei an mindestens einem der Anschlagelemente (6, 7) zumindest teilweise im Bereich der Anschlagfläche (61, 71) eine Schicht (5) aus nichtmetallischem Material angebracht ist, wobei die Hohlwelle (21) und die Innenwelle (22) bezüglich einer Drehung um die Längsachse (L) formschlüssig ineinander greifende Formschlusselemente (24) aufweisen, die als ineinander greifende Außen- und Innenverzahnungen (23 ,211) mit in Längsrichtung achsparallel erstreckenden Nuten und in diese eingreifenden Zähnen (24) ausgebildet sind und die zumindest teilweise mit der Schicht (5) bedeckt sind, **dadurch gekennzeichnet, dass** die Schicht (5) auch zumindest ein Anschlagelement (7) auf dessen axialer Anschlagfläche (71) umschließt, welches in einem Umfangsbereich der Innenwelle (22) zwischen benachbarten Zähnen (24) angeordnet ist, und welches in die Innenwelle (22) als Zwick durch eine in die äußere Oberfläche schräg zur Längsachse (L) eingestemmte Einkerbung plastisch eingestemmt ist, an deren Rand das metallische Material der Innenwelle (22) plastisch verdrängt und radial nach außen aufgeworfen ist.

2. Lenkwelle (2) nach Anspruch 1, **dadurch gekennzeichnet, dass** das nichtmetallische Material weicher ist als das metallische Material von Hohl- und Innenwelle (21, 22).

3. Lenkwelle (2) nach einem der vorangehenden Ansprüche, **dadurch gekennzeichnet, dass** das nichtmetallische Material ein thermoplastischer Kunststoff ist.

4. Lenkwelle (2) nach Anspruch 3, **dadurch gekennzeichnet, dass** die Schicht (5) als Umspritzung ausgebildet ist.

5. Lenkwelle (2) nach einem der vorangehenden Ansprüche, **dadurch gekennzeichnet, dass** die Schicht (5) stoffschlüssig an dem Anschlagelement (6, 7) befestigt ist.

6. Lenkwelle (2) nach einem der vorangehenden Ansprüche, **dadurch gekennzeichnet, dass** das Anschlagelement (6, 7) zumindest teilweise formschlüssig von der Schicht (5) umschlossen wird.

7. Verfahren zur Herstellung eine längenverstellbaren Lenkwelle, umfassend eine Hohlwelle (21) aus metallischem Material mit einer Öffnung (26), in der eine Innenwelle (22) aus metallischem Material drehmomentschlüssig und axial bewegbar aufgenommen ist, und die eine Auszugsicherung mit Anschlagelementen (6, 7) aufweist, die zumindest einen Außenanschlag (6) umfassen, der in die Öffnung (26) der Hohlwelle (21) vorsteht, und einen Innenanschlag (7), der von der Innenwelle (22) nach außen vorsteht, wobei der Außenanschlag (6) aus dem metallischen Material der Hohlwelle (21) geformt ist und der Innenanschlag (7) aus dem metallischen Material der Innenwelle (22) geformt ist, wobei die Anschlagelemente (6, 7) in axialer Richtung gegeneinander gerichtete Anschlagflächen (61, 71) aufweisen, mit den Schritten
- Bereitstellen einer jeweils metallischen Hohlwelle (21) und Innenwelle (22), die bezüglich einer Drehung um die Längsachse (L) formschlüssig ineinander greifende Formschlusselemente (24) aufweisen, die als ineinander greifende Außen- und Innenverzahnungen (23 ,211) mit in Längsrichtung achsparallel erstreckenden Nuten und in diese eingreifenden Zähnen (24) ausgebildet sind und die zumindest teilweise mit einer Schicht (5) aus nichtmetallischem Material bedeckt sind,
- Erzeugen eines Innenanschlags (7) mit einer axialen Anschlagfläche (71) auf der Innenwelle (22), welcher vom Außenumfang der Innenwelle (22) radial nach außen vorsteht,
- Einführen der Innenwelle (22) in axialer Richtung in die Öffnung (26) der Hohlwelle (21),
- Erzeugen eines Außenanschlags (6) mit einer axialen Anschlagfläche (61) an der Hohlwelle (21), welcher radial nach innen in der offenen Querschnitt der Öffnung (26) eingreift, wobei die Anschlagflächen (61, 71) von Innen- und Außenanschlag (6 und 7) in axialer Richtung gegeneinander gerichtet sind,
**gekennzeichnet dadurch,**
**dass** vor dem Einführen der Innenwelle (22) in die Öffnung (26) der Hohlwelle (21) die Schicht (5) zumindest teilweise im Bereich zumindest einer der Anschlagflächen (61, 71) angebracht wird, so dass die Schicht (5) auch zumindest ein Anschlagelement (7) auf dessen axialer Anschlagfläche (71) umschließt, welches in einem Umfangsbereich zwischen benachbarten Zähnen (24) angeordnet ist, und welches in die Innenwelle (22) als Zwick durch eine in die äußere Oberfläche schräg zur Längsachse (L) eingestemmte Einkerbung plastisch eingestemmt ist, an deren Rand das metallische Material der Innenwelle (22) plastisch verdrängt und radial nach außen aufgeworfen ist.

8. Verfahren nach Anspruch 7, **dadurch gekennzeichnet, dass** die Schicht (5) aus thermoplastischem Kunststoff im Spritzgussverfahren als Umspritzung auf die Innenwelle (22) aufgebracht wird und zumindest einen Teil einer axialen Anschlagfläche (61) des Innenanschlags (6) bedeckt.

## Claims

1. Length-adjustable steering shaft (2), comprising a hollow shaft (21) made of metallic material with an opening (26), in which an inner shaft (22) made of metallic material is accommodated fixedly in terms of torque and in an axially movable manner, and which comprises a pull-out retention means with stop elements (6, 7) which comprise at least one outer stop (6) which protrudes into the opening (26) of the hollow shaft (21), and an inner stop (7) which protrudes outwards from the inner shaft (22), wherein the outer stop (6) is formed from the metallic material of the hollow shaft (21) and the inner stop (7) is formed from the metallic material of the inner shaft (22), wherein the stop elements (6, 7) comprise stop surfaces (61, 71) which are directed towards each other in the axial direction,
wherein a layer (5) of non-metallic material is applied to at least one of the stop elements (6, 7) at least partially in the region of the stop surface (61, 71), wherein the hollow shaft (21) and the inner shaft (22) comprise form-fitting elements (24) which intermesh in a form-fitting manner with respect to a rotation about the longitudinal axis (L), which are in the form of intermeshing outer and inner toothings (23, 211) with grooves extending in an axially parallel manner in the longitudinal direction and teeth (24) engaging in said grooves, and which are at least partially covered with the layer (5), **characterized in that** the layer (5) also encloses at least one stop element (7) on its axial stop surface (71), which stop element is arranged in a circumferential region of the inner shaft (22) between adjacent teeth (24) and is plastically caulked into the inner shaft (22) in the form of a pinch through a notch caulked into the outer surface obliquely with respect to the longitudinal axis (L), at the edge of which notch the metallic material of the inner shaft (22) is plastically displaced and accumulated radially outwards.

2. Steering shaft (2) according to Claim 1, **characterized in that** the non-metallic material is softer than the metallic material of the hollow shaft and inner shaft (21, 22).

3. Steering shaft (2) according to either of the preceding claims, **characterized in that** the non-metallic material is a thermoplastic plastic material.

4. Steering shaft (2) according to Claim 3, **characterized in that** the layer (5) is in the form of an insert moulding.

5. Steering shaft (2) according to one of the preceding claims, **characterized in that** the layer (5) is substance-to-substance bonded to the stop element (6, 7) .

6. Steering shaft (2) according to one of the preceding claims, **characterized in that** the stop element (6, 7) is at least partially enclosed in a form-fitting manner by the layer (5).

7. Method for producing a length-adjustable steering shaft, comprising a hollow shaft (21) made of metallic material with an opening (26), in which an inner shaft (22) made of metallic material is accommodated fixedly in terms of torque and in an axially movable manner, and which comprises a pull-out retention means with stop elements (6, 7) which comprise at least one outer stop (6) which protrudes into the opening (26) of the hollow shaft (21), and an inner stop (7) which protrudes outwards from the inner shaft (22), wherein the outer stop (6) is formed from the metallic material of the hollow shaft (21) and the inner stop (7) is formed from the metallic material of the inner shaft (22), wherein the stop elements (6, 7) comprise stop surfaces (61, 71) which are directed towards each other in the axial direction, with the following steps:
- providing a respective metallic hollow shaft (21) and inner shaft (22), which comprise form-fitting elements (24) which intermesh in a form-fitting manner with respect to a rotation about the longitudinal axis (L), which are in the form of intermeshing outer and inner toothings (23, 211) with grooves extending in an axially parallel manner in the longitudinal direction and teeth (24) engaging in said grooves, and which are at least partially covered with a layer (5) of non-metallic material,
- producing an inner stop (7) with an axial stop surface (71) on the inner shaft (22), said inner stop protruding radially outwards from the outer circumference of the inner shaft (22),
- introducing the inner shaft (22) in the axial direction into the opening (26) of the hollow shaft (21),
- producing an outer stop (6) with an axial stop surface (61) on the hollow shaft (21), said outer stop engaging radially inwards in the open cross section of the opening (26), wherein the stop surfaces (61, 71) of inner and outer stop (6 and 7) are directed towards each other in the axial direction,
**characterized in that,**
before the inner shaft (22) is introduced into the opening (26) in the hollow shaft (21), the layer (5) is at least partially applied in the region of at least one of the stop surfaces (61, 71), with the result that the layer (5) also encloses at least one stop element (7) on its axial stop surface (71), which stop element is arranged in a circumferential region between adjacent teeth (24) and is plastically caulked into the inner shaft (22) in the form of a pinch through a notch caulked into the outer surface obliquely with respect to the longitudinal axis (L), at the edge of which notch the metallic material of the inner shaft (22) is plastically displaced and accumulated radially outwards.

8. Method according to Claim 7, **characterized in that** the layer (5) of thermoplastic plastic material is applied as an insert moulding to the inner shaft (22) by injection moulding and covers at least part of an axial stop surface (61) of the inner stop (6).

## Revendications

1. Arbre de direction modifiable en longueur (2), comprenant un arbre creux (21) en matériau métallique avec une ouverture (26), dans laquelle un arbre intérieur (22) en matériau métallique est logé avec transmission de couple et de manière axialement mobile, et qui présente une sécurité anti-extraction avec des éléments de butée (6, 7), qui comprennent au moins une butée extérieure (6) qui fait saillie dans l'ouverture (26) de l'arbre creux (21) et une butée intérieure (7) qui fait saillie vers l'extérieur à partir de l'arbre intérieur (22), la butée extérieure (6) étant formée dans le matériau métallique de l'arbre creux (21) et la butée intérieure (7) étant formée dans le matériau métallique de l'arbre intérieur (22), les éléments de butée (6, 7) présentant des surfaces de butée (61, 71) dirigées l'une vers l'autre dans la direction axiale, une couche (5) de matériau non métallique étant appliquée sur au moins un des éléments de butée (6, 7) au moins partiellement dans la zone de la surface de butée (61, 71),
l'arbre creux (21) et l'arbre intérieur (22) présentant des éléments de complémentarité de forme (24) s'engageant les uns dans les autres par complémentarité de forme par rapport à une rotation autour de l'axe longitudinal (L), qui sont configurés sous forme de dentures extérieures et intérieures (23, 211) s'engageant les unes dans les autres avec des rainures s'étendant de manière axialement parallèle dans la direction longitudinale et des dents (24) s'engageant dans celles-ci, et qui sont recouverts au moins partiellement par la couche (5), **caractérisé en ce que** la couche (5) entoure également au moins un élément de butée (7) sur sa surface de butée axiale (71), qui est agencé dans une zone périphérique de l'arbre intérieur (22) entre des dents voisines (24), et qui est mortaisé plastiquement dans l'arbre intérieur (22) sous forme de gousset à travers une entaille mortaisée dans la surface extérieure en oblique par rapport à l'axe longitudinal (L), au bord de laquelle le matériau métallique de l'arbre intérieur (22) est refoulé plastiquement et relevé radialement vers l'extérieur.

2. Arbre de direction (2) selon la revendication 1, **caractérisé en ce que** le matériau non métallique est plus mou que le matériau métallique de l'arbre creux et de l'arbre intérieur (21, 22).

3. Arbre de direction (2) selon l'une quelconque des revendications précédentes, **caractérisé en ce que** le matériau non métallique est une matière plastique thermoplastique.

4. Arbre de direction (2) selon la revendication 3, **caractérisé en ce que** la couche (5) est configurée sous forme de surmoulage.

5. Arbre de direction (2) selon l'une quelconque des revendications précédentes, **caractérisé en ce que** la couche (5) est fixée à l'élément de butée (6, 7) par accouplement de matière.

6. Arbre de direction (2) selon l'une quelconque des revendications précédentes, **caractérisé en ce que** l'élément de butée (6, 7) est au moins partiellement entouré par la couche (5) par complémentarité de forme.

7. Procédé de fabrication d'un arbre de direction réglable en longueur, comprenant un arbre creux (21) en matériau métallique avec une ouverture (26), dans laquelle un arbre intérieur (22) en matériau métallique est logé avec transmission de couple et de manière axialement mobile, et qui présente une sécurité anti-extraction avec des éléments de butée (6, 7), qui comprennent au moins une butée extérieure (6) qui fait saillie dans l'ouverture (26) de l'arbre creux (21) et une butée intérieure (7) qui fait saillie vers l'extérieur à partir de l'arbre intérieur (22), la butée extérieure (6) étant formée dans le matériau métallique de l'arbre creux (21) et la butée intérieure (7) étant formée dans le matériau métallique de l'arbre intérieur (22), les éléments de butée (6, 7) présentant des surfaces de butée (61, 71) dirigées l'une vers l'autre dans la direction axiale, comprenant les étapes suivantes :
- la préparation d'un arbre creux (21) et d'un arbre intérieur (22) respectivement métalliques, qui présentent des éléments de complémentarité de forme (24) s'engageant les uns dans les autres par complémentarité de forme par rapport à une rotation autour de l'axe longitudinal (L), qui sont configurés sous forme de dentures extérieures et intérieures (23 , 211) s'engageant les unes dans les autres, avec des rainures s'étendant de manière axialement parallèle dans la direction longitudinale et des dents (24) s'engageant dans celles-ci, et qui sont au moins partiellement recouverts par une couche (5) de matériau non métallique,
- la création d'une butée intérieure (7) avec une surface de butée axiale (71) sur l'arbre intérieur (22), qui fait saillie radialement vers l'extérieur à partir de la périphérie extérieure de l'arbre intérieur (22),
- l'introduction de l'arbre intérieur (22) dans la direction axiale dans l'ouverture (26) de l'arbre creux (21),
- la création d'une butée extérieure (6) avec une surface de butée axiale (61) sur l'arbre creux (21), qui s'engage radialement vers l'intérieur dans la section transversale ouverte de l'ouverture (26), les surfaces de butée (61, 71) de la butée intérieure et de la butée extérieure (6 et 7) étant dirigées l'une vers l'autre dans la direction axiale,
**caractérisé en ce que**
avant l'introduction de l'arbre intérieur (22) dans l'ouverture (26) de l'arbre creux (21), la couche (5) est appliquée au moins partiellement dans la zone d'au moins une des surfaces de butée (61, 71), de telle sorte que la couche (5) entoure également au moins un élément de butée (7) sur sa surface de butée axiale (71), qui est agencé dans une zone périphérique entre des dents voisines (24), et qui est mortaisé plastiquement dans l'arbre intérieur (22) sous forme de gousset à travers une entaille mortaisée dans la surface extérieure en oblique par rapport à l'axe longitudinal (L), au bord de laquelle le matériau métallique de l'arbre intérieur (22) est refoulé plastiquement et relevé radialement vers l'extérieur.

8. Procédé selon la revendication 7, **caractérisé en ce que** la couche (5) en matière plastique thermoplastique est appliquée sur l'arbre intérieur (22) en tant que surmoulage par le procédé de moulage par injection et recouvre au moins une partie d'une surface de butée axiale (61) de la butée intérieure (6) .
